# EUROPEAN PATENT SPECIFICATION

(11) **EP 0 903 678 B1**
(45) Date of publication and mention of the grant of the patent: **26.03.2003**
(21) Application number: 98117821.3
(22) Date of filing: 19.09.1998
(51) Int. Cl.: G06F 17/60

(54) **Workflow management system**
Arbeitsflussverwaltungssystem
Système de gestion de flux de travail

(30) Priority: 23.09.1997 GB 9720166
(43) Date of publication of application: 24.03.1999
(73) Proprietor: Fujitsu Services Limited, London, EC2A 1SL (GB)
(72) Inventor: Parker, Jeffrey Martin, Barlaston, Staffordshire (GB); Westmacott, Peter, Sandbach, Cheshire CW11 1EJ (GB)
(74) Representative: Guyatt, Derek Charles

(56) References cited:
- WO-A-94/29804
- SARIN S K: "Object-oriented workflow technology in InConcert" DIGEST OF PAPERS OF THE COMPUTER SOCIETY COMPUTER CONFERENCE COMPCON,US,LOS ALAMITOS, IEEE COMP. SOC. PRESS, vol. CONF. 41, 1996, pages 446-450-450, XP002126042 ISBN: 0-8186-7414-8
- MARSHAK R T: "IBM'S FLOWMARK OBJECT-ORIENTED WORKFLOW FOR MISSION-CRITICAL APPLICATIONS" WORKGROUP COMPUTING REPORT,XX,XX, vol. 17, no. 5, 1 May 1994 (1994-05-01), pages 3-13, XP000568699 ISSN: 1057-8889
- GREENWOOD R M ET AL: "THE USE OF A PERSISTENT LANGUAGE IN THE IMPLEMENTATION OF A PROCESS SUPPORT SYSTEM" ICL TECHNICAL JOURNAL,GB,PETER PERGRINUS LTD. HITCHIN, vol. 8, no. 1, 1 May 1992 (1992-05-01), pages 108-129, XP000300983

## Description

This invention relates to workflow management systems.

A workflow management system is a computer-implemented system for providing support for business processes. For example, such a system may be used in a manufacturing business, to support the process of handling orders from customers. Typically, such a system maintains a work pool, containing work items (such as customer orders) waiting to be processed, and allows a number of individual users (such as sales, accounts and purchasing personnel) to access the work items in the pool.

S.K.Sarin, "Object-oriented workflow technology in InConcert", Proceedings of IEEE COMPCON '96, pages 446-450, describes an object-oriented workflow management system in which a process consists of tasks (the individual units of work that comprise the process), roles (designating the participants that perform the tasks), and references to documents or other data objects that are manipulated by tasks in the process. A Process Manager allows the task structure of a process instance to be modified dynamically.

The object of the present invention is to provide a novel workflow management system in which changes to the process definition can be made in a safe and efficient manner.

### Summary of the Invention

According to the invention there is provided a workflow management system for supporting a business process in which a plurality of work items are processed by a plurality of user objects in accordance with business rules ,wherein
(a) the system includes a plurality of workpool objects, responsible for maintaining a plurality of work pools for storing work items waiting to be processed, and
(b) each of the user objects contains its own set of business rules specifying how this user object is to handle work items, characterised in that : each one of the business rules associated with a user object comprises a next steps table, containing a set of process steps to be carried out by the user object, the next steps table being indexed by a key formed by combining a current process step number and a current user action identifier.

The fact that each of the user objects contains its own set of business rules facilitates the making of changes to the process definition in a safe and efficient manner, even while the system is running, since only those user objects that are affected by the change need be modified.

### Brief Description of the Drawings

Figure 1 is a block diagram of a computer system incorporating a workflow management system.

Figure 2 is a block diagram showing the workflow management system in more detail.

### Description of an Embodiment of the Invention

One workflow management system in accordance with the invention will now be described by way of example with reference to the accompanying drawings.

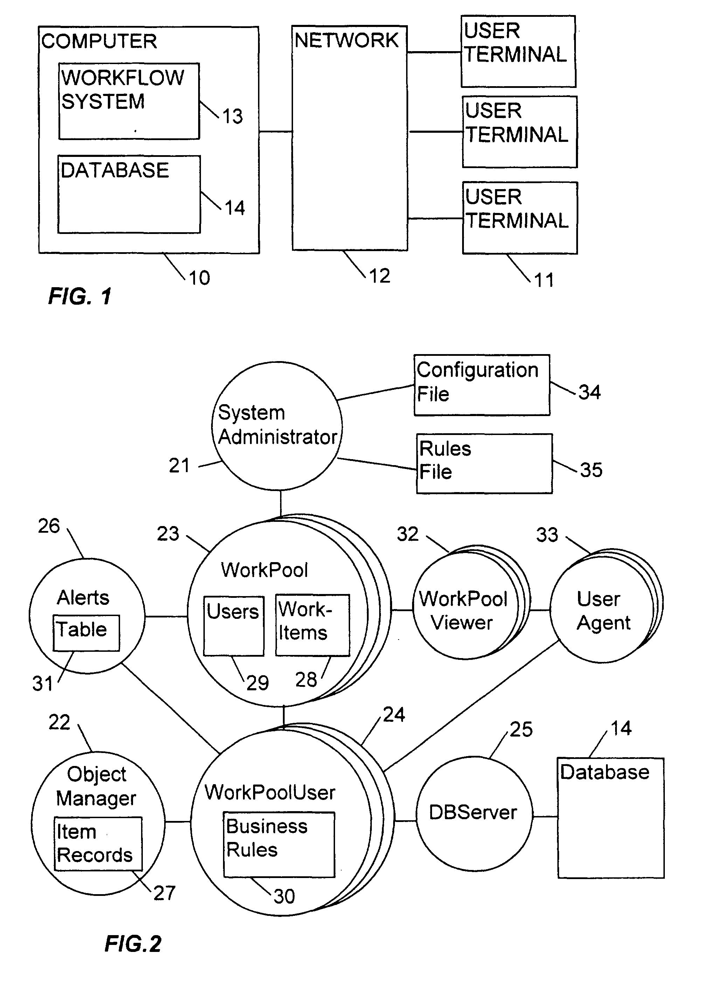

Figure 1 shows a computer system comprising a server computer 10, and a number of user terminals 11 connected to the server by way of a network 12. The server runs a workflow management system 13, which can access a database 14.

The work of the system is divided into units referred to herein as cases, which are processed independently of each other. For example, a case may correspond to a customer order. When a new case is introduced into the system, a data item, referred to herein as a business object, is created in the database. The business object contains all the business data relevant to that case (for example, order number, customer name, quantity, price and so on). The content of business objects may vary, and different business objects may be held in different database tables. A case may have a number of business objects associated with it, logically organised in a tree structure in which each object may have one or more subsidiary (child) objects. For example, a business object representing a customer order may have subsidiary business objects representing associated internal purchase orders.

Typically, each case will require a number of operations to be performed on the associated business object, by users or external tools. This is achieved by placing work items in a number of work pools. Each business object may have a number of work items associated with it, allowing a number of operations to be performed on a case in parallel. Users can view the contents of the work pools, and select work items for processing, according to predefined business rules. This processing may, in turn, generate further work items for the work pools.

### Workflow management system

Figure 2 shows the workflow management system 13 in more detail.

The workflow management system comprises a number of active processing objects referred to herein as roles, each of which encapsulates its local data and represents an independent thread of execution. These roles include a SystemAdministrator role 21, an ObjectManager role 22, a number of WorkPool roles 23, a number of WorkPoolUser roles 24, a DBServer role 25, and an Alerts role 26. These various roles may conveniently be built using the role based process technology provided by the ICL Processwise Integrator, as described for example in the following reference:
"The Use of a Persistent Language in the Implementation of a Process Support System"
R.Mark Greenwood et al.
ICL Technical Journal, May 1992, page 109.

The SystemAdministrator role 21 is responsible for the introduction of users to the system, and for the creation, deletion and modification of the other roles.

The ObjectManager role 22 is responsible for managing the business objects. This role holds an internal table 27 containing a number of item records, one for each business object held in the database. Whenever a business object is created, a corresponding item record is also created, for referencing the business object. The item record contains information about the business object in a standard format. The tree structure of the business objects is represented by parent-child links in the corresponding item records. The ObjectManager role also provides a locking mechanism for locking the business objects, so as to allow only one user at a time to update a given object.

The WorkPool roles 23 are responsible for maintaining the work pools. One instance of the WorkPool role is created for each work pool in the system. Each WorkPool role instance holds an internal table 28 containing a set of work items, which form the work pool. It also holds an internal table 29, containing details of the users who are assigned to this work pool. For each user, the user table holds the user's full name, login name and password.

The WorkPoolUser roles 24 are responsible for processing the work items. One instance of the WorkPoolUser role is created for each user assigned to each work pool. In other words, each WorkPool role has a number of WorkPoolUser roles associated with it, one for each user assigned to that work pool, and each user has one WorkPoolUser role for each work pool that can be accessed by that user. A WorkPoolUser role may be associated with an external application rather than (or as well as) a human operator. Each WorkPoolUser role instance holds a set of business rules tables 30, specifying how this role is to handle work items, including when information about when to pass work to other roles.

The DBServer role 25 provides a common point of access to the database 14 for the other roles.

The Alerts role 26 handles deadlines for processing work items. It contains an internal table 31. In response to a registerAlert request from a WorkPoolUser role, it creates a record in this internal table, specifying the deadline date and time, and the work item to which the deadline relates. The Alerts role periodically monitors this table, to check whether any deadlines have expired. When a deadline expires, the Alerts role sends a timerEvent call to the appropriate WorkPool role, which in turn calls the appropriate WorkPoolUser role to handle the alert.

The system also includes a number of WorkPoolViewer objects 32, one for each user assigned to each work pool. Each WorkPoolViewer object enables a user to access a work pool, to view a list of all the work items currently in that work pool, and to select one of the work items for viewing or for action.

The system also includes a number of user agents 33, which provide interfaces between the workflow management system and the respective users.

### Item records

As mentioned above, the ObjectManager role holds an item record for each business object in the database. The structure of an item record is as follows:
- id: The record identifier. This is the same as the database key of the corresponding business object.
- type: The name of the database table in which the business object is held.
- partOf: The identifier of the parent item record (if any).
- children: A list of the identifiers of all the child item records (if any) for this record.
- caseId: The identifier of the topmost parent of this family of item records.
- summary: A description field.
- workItems: A table of the work items associated with this business object. For each work item, the table contains a copy of the work item, the identity of the work pool in which the item is located, and the work pool type.

### Work items

As mentioned above, each WorkPool role holds a number of work items, constituting a work pool. The structure of each work item is as follows:
- id: Identifier. This is a reference, local to the work pool, which identifies the work item.
- objID: Object identifier. This is a reference to the corresponding item record.
- summary: A copy of the summary field in the corresponding item record.
- workType: A copy of the type field in the corresponding item record.
- priority: Indicates whether or not the user is required to take action on this work item.
- date: Deadline date.
- assignedTo: The name of the user to whom the work item is currently assigned.
- state: The current state of the work item.

As will be described, the "state" field of a work item determines the operations that are to be performed on it when it is selected by a user.

### WorkPoolViewer

Whenever a user logs in to the system, that user's WorkPoolViewer sends a message to the associated WorkPool role, requesting it to supply a copy of its work pool. In response to this request, the WorkPool role copies its current set of work items to the WorkPoolViewer, where the items are displayed to the user. The displayed information for each work item is derived from the objID, summary, workType, state, priority, date, and assignedTo fields. As will be described, whenever the WorkPool role changes the content of any work item, it notifies all its associated WorkPoolViewers of the change, so that they can keep their displayed information up to date.

The WorkPoolViewer allows the user to select any one of the displayed work items, for example by clicking on the item with a mouse. The user may then either accept the selected work item, or simply request to view it. If the user accepts an item, the WorkPoolViewer sends an "accept" message to the WorkPool role. Alternatively, if the user requests to view an item, the WorkPoolViewer sends an "view" message to the WorkPool role. Both of these messages contain the identity of the selected work item.

### WorkPool role

When a WorkPool role receives an "accept" message from a WorkPoolViewer, it performs the following operations. The WorkPool role first checks whether the selected work item is available for assignment, i.e. whether the assignedTo field of the work item is empty. If so, the assignedTo field is set to the login name of the user, and the WorkPool role then sends a manageWorkItem request to the WorkPoolUser role for this user. The request contains a copy of the work item, and an "assign" command. The WorkPool role also sends a copy of the updated work item to all its associated WorkPoolViewers, to notify them of this change.

If the WorkPool role receives a "view" message from a WorkPoolViewer, it performs the following operations. The WorkPool role sends a manageWorkItem request to WorkPoolUser role, containing a copy of the work item, and a "view" command. In this case the WorkPool role does not check or set the assignedTo field.

The WorkPool role can also receive a routeWorkItem request from any of the WorkPoolUser roles, specifying one of the following commands: "add", "replace", "release" and "delete". In response to an "add" command, the WorkPool role creates a new work item with a unique identifier in its internal table, and returns the identifier of the new work item to the calling WorkPoolUser role. In response to a "replace" command, the WorkPool role replaces an identified work item in its internal tables with an updated version of the work item, and sets the assignedTo field of the work item to the empty string. In response to a "release" command, the WorkPool role sets the assignedTo field of an identified work item to the empty string. In response to a "delete" command, the WorkPool role deletes an identified work item from its internal table. In each case, the WorkPool role notifies all the associated WorkPoolViewers of the change. In the case of the "replace", "release" and "delete" commands, if the identified work item is not present, the WorkPool role returns an error message to the caller.

The WorkPool role can also receive a timerEvent call from the Alerts role, to notify it that a deadline has expired in relation to a specified work item. In response to this call, the Workpool role locks the specified work item (on behalf of an arbitrarily chosen user), and then sends a manageWorkItem request to the WorkPoolUser role. The request contains the contents of the work item, and an "alert" command. If the identified work item is not present in the work pool, the alert is ignored.

### WorkPoolUser role

When a WorkPoolUser role receives a manageWorkItem request from a WorkPool role, it performs the following actions.

The WorkPoolUser role first calls the ObjectManager role, requesting it fetch and lock the item record identified by the objID field of the work item. If the item record is not locked, the ObjectManager role will lock it and return a copy of the item record, including all the related work items. However, if the item record is already locked, an error message is returned.

The WorkPoolUser role then accesses its locally held business rules tables, using the "state" field of the work item as a key, to obtain the following information:
- A form to be displayed to the user.
- An explanatory message for the user.
- An action list for the user to select from.

The WorkPoolUser role also calls the DBServer role to fetch business data from the business object referenced by the item record, and also to fetch process data relevant to the current state.

The WorkPoolUser role then calls its associated user agent, requesting it to display the form, message and action list, with the data retrieved from the database in appropriate fields of the form. The user may then enter data, update fields, and select actions in the form. The form includes "OK" and "Cancel" buttons. If the user presses the "OK" button, the user agent returns the updated fields to the WorkPoolUser role, along with an "action" field specifying the action selected by the user.

When the WorkPoolUser role receives this information, it concatenates the "step" field of the work item with the "action" field returned by the user, to form a key. This key is used to access a nextSteps table in the business rules, so as to obtain a series of process steps to be carried out.

Each process step may involve creating a new work item in a target work pool, or replacing or deleting an existing work item in a target work pool. Creating, replacing or deleting a work item is performed by sending a routeWorkItem request containing an "add", "replace" or "delete" command to the appropriate WorkPool role. The target work pool may be the current work pool, or may be another specified work pool. When a work item is created, replaced or deleted, a request also is sent to the ObjectManager role, requesting it to update the list of work items in the corresponding item record. If the process step specifies a deadline for the work item, a registerAlert request is sent to the Alerts role, so as to set up a new deadline.

The particular sequence of steps depends on the particular business process being supported by the system. For example, when a work item representing a new sale is processed by a salesperson, the business rules may specify that a further work item, representing an invoicing task, should be created and placed in another work pool for access by an accounts clerk.

Finally, any business objects affected are updated by passing the object identifier, type and data table to the DBServer role, and the corresponding item records are updated by calling the ObjectManager role.

The WorkPoolUser role is then ready to accept another manageWorkItem request.

If permitted by its business rules, a WorkPoolUser role may also allow its user to create a new case, e.g. a salesperson may be permitted to create a new customer order, while an accounts clerk would not.

### SystemAdministrator

When the workflow management system is installed, the SystemAdministrator role automatically customises the system for the particular business process being supported. The information for customising the system is supplied in a set of configuration files 34 and business rules files 35. The configuration files specify the required work pools and the users that are to be assigned to each of these work pools. The business rules files specify the business rules for the system.

The SystemAdministrator role first reads the configuration files, and creates a user agent object 33 for each user. It also creates a WorkPool role 23 for each required work pool, with the names of its users held in its internal table. The WorkPool roles are created as instances of a general WorkPool type.

Each WorkPool role instance then calls the SystemAdministrator role 21, requesting it to create a WorkPoolUser role 24 for each of its users. Each WorkPoolUser role is given a copy of the business rules relevant to its part in the behaviour of the overall process. The WorkPoolUser roles are created as instances of a general WorkPoolUser type. A WorkPoolViewer object 32 is also created for each user.

The SystemAdministrator role can also be called at any time, by a suitably authorised user, to modify the business rules in any WorkPoolUser role, to create new work pools, to introduce new users to the work pools, or to remove existing users from the work pools. For example, specialised roles can readily be created to cater for special requirements. These actions can be performed dynamically, while the application is running. This ability to dynamically modify the system is a consequence of the fact that each of the WorkPool roles stores its own internal list of users, and each of the WorkPoolUser roles stores its own internal business rules.

## Claims

1. A workflow management system for supporting a business process in which a plurality of work items (28) are processed by a plurality of user objects (24) in accordance with business rules (30), wherein
(a) the system includes a plurality of workpool objects (23), responsible for maintaining a plurality of work pools for storing work items (28) waiting to be processed, and
(b) each of the user objects (24) contains its own set of business rules (30) specifying how this user object is to handle work item, **characterised in that**:
each one of the business rules (30) associated with a user object comprises a next steps table, containing a set of process steps to be carried out by the user object, the next steps table being indexed by a key formed by combining a current process step number and a current user action identifier.

2. A workflow management system according to claim 1 wherein each of the workpool objects (23) maintains its own list (29) of users who are assigned to this workpool object.

3. A workflow management system according to either preceding claim wherein each of the workpool objects (23) has a number of workpool viewer objects (32) associated with it, for allowing respective users to view the work items held in that workpool object and to select one of those work items.

4. A workflow management system according to Claim 3 wherein, when a work item is selected by a user through a workpool viewer object (32), the workpool viewer object informs the associated workpool object (23), and the workpool object then sends a copy of the selected work item to the user object (24) associated with that user.

5. A workflow management system according to any preceding claim 1, including a system administrator object (21) for allowing a user to modify the business rules (30) in any selected user object (24) dynamically, while the system is running.

## Patentansprüche

1. Arbeitsablauf-Management-System zur Unterstützung eines Geschäftsprozesses, bei dem eine Vielzahl von Arbeitsposten (28) durch eine Vielzahl von Benutzerobjekten (24) nach Geschäftsregeln (30) verarbeitet werden, wobei
(a) das System eine Vielzahl von Arbeitspool-Objekten (23) umfaßt, die für die Aufrechterhaltung einer Vielzahl von Arbeitspools zur Speicherung von Arbeitsposten (28), die darauf warten, verarbeitet zu werden, zuständig sind, und
(b) jedes der Benutzerobjekte (24) seinen eigenen Satz von Geschäftsregeln (30) enthält, die festlegen, wie dieses Benutzerobjekt Arbeitsposten handhaben soll, **dadurch gekennzeichnet, daß**
jede der Geschäftsregeln (30), die einem Benutzerobjekt zugeordnet sind, eine Tabelle für die nächsten Schritte aufweist, die einen Satz von Prozeßschritten umfaßt, welche von dem Benutzerobjekt ausgeführt werden sollen, wobei die Tabelle für die nächsten Schritte durch einen Schlüssel schrittweise weitergeschaltet wird, der durch Kombinieren einer Schrittzahl eines laufenden Prozesses und einer Identifiziervorrichtung für eine laufende Benutzeraktion dargestellt wird.

2. System nach Anspruch 1, bei dem jedes der Arbeitspool-Objekte (23) seine eigene Liste (29) von Benutzern aufrechterhält, die diesem Arbeitspool-Objekt zugeordnet sind.

3. System nach Anspruch 1 oder 2, bei dem jedes der Arbeitspool-Objekte (23) eine Anzahl von Arbeitspool-Betrachter-Objekten (32) besitzt, die ihm zugeordnet sind, um entsprechenden Benutzern zu erlauben, die Arbeitsposten, die in diesem Arbeitspool-Objekt vorhanden sind, zu betrachten, und einen dieser Arbeitsposten auszuwählen.

4. System nach Anspruch 3, bei dem dann, wenn ein Arbeitsposten durch einen Benutzer über ein Arbeitspool-Betrachter-Objekt (32) ausgewählt worden ist, das Arbeitspool-Betrachter-Objekt das zugeordnete Arbeitspool-Objekt (23) informiert und das Arbeitspool-Objekt dann eine Kopie des ausgewählten Arbeitspostens an das diesem Benutzer zugeordnete Benutzerobjekt (24) sendet.

5. System nach einem der vorausgehenden Ansprüche, **gekennzeichnet durch** ein System-Administrator-Objekt (21), um einem Benutzer zu ermöglichen, die Geschäftsregeln (30) in einem beliebigen ausgewählten Benutzerobjekt (24) dynamisch zu modifizieren, während das System läuft.

## Revendications

1. Système de gestion de flux de travail pour exécuter un processus de gestion dans lequel une pluralité d'éléments de travail (28) sont traités par une pluralité d'objets utilisateur (24) selon des règles de gestion (30), dans lequel
(a) le système comprend une pluralité d'objets de groupe de travail (23), responsables du maintien d'une pluralité de groupes de travail pour mémoriser des éléments de travail (28) en attente de traitement, et
(b) chacun des objets utilisateur (24) contient son propre ensemble de règles de gestion (30) spécifiant comment cet objet utilisateur doit traiter des éléments de travail, **caractérisé en ce que** :
chacune des règles de gestion (30) associée à un objet utilisateur comporte une nouvelle table d'étapes, contenant un ensemble d'étapes de processus à exécuter par l'objet utilisateur, la nouvelle table d'étapes étant indexée par un code formé en combinant un numéro d'étapes de processus courant et un identificateur d'action utilisateur courant.

2. Système de gestion de flux de travail selon la revendication 1, dans lequel chacun des objets de groupe de travail (23) maintient sa propre liste (29) d'utilisateurs qui sont affectés à cet objet de groupe de travail.

3. Système de gestion de flux de travail selon l'une quelconque des revendications précédentes, dans lequel chacun des objets de groupe de travail (23) possède une pluralité d'objets de lecteur de groupe de travail (32) qui lui est associé pour permettre à des utilisateurs respectifs d'observer les éléments de travail contenus dans cet objet de groupe de travail et pour sélectionner un de ses éléments de travail.

4. Système de gestion de flux de travail selon la revendication 3, dans lequel, lorsqu'un élément de travail est choisi par un utilisateur par l'intermédiaire d'un objet lecteur de groupe de travail (32), l'objet lecteur de groupe de travail informe l'objet de groupe de travail associé (23), et l'objet de groupe de travail envoie ensuite une copie de l'élément de travail choisi à l'objet utilisateur (24) associé à cet utilisateur.

5. Système de gestion de flux de travail selon l'une quelconque des revendications précédentes, comprenant un objet administrateur de système (21) pour permettre à un utilisateur de modifier les règles de gestion (30) dans un objet utilisateur sélectionné quelconque (24) dynamiquement, tandis que le système fonctionne.
